# EUROPEAN PATENT APPLICATION

(11) **EP 4 428 974 A1**
(43) Date of publication of application: **11.09.2024**
(21) Application number: 24158634.6
(22) Date of filing: 20.02.2024
(51) Int. Cl.: H01M 10/04, H01M 10/0583, H01M 10/052, H01M 10/0525

(54) **ELECTRODE ASSEMBLY MANUFACTURING APPARATUS AND MANUFACTURING METHOD OF THE SAME**

(30) Priority: 08.03.2023 KR 20230030640
(71) Applicant: SK On Co., Ltd., Seoul 03161 (KR)
(72) Inventor: HWANG, Chang Mook, 34124 Daejeon (KR); KIM, Hyun Ji, 34124 Daejeon (KR); LEE, Jong Hyeok, 34124 Daejeon (KR); JO, Yoon Ji, 34124 Daejeon (KR)
(74) Representative: Prüfer & Partner mbB Patentanwälte · Rechtsanwälte

(57) **Abstract**

An electrode assembly manufacturing apparatus and method according to one embodiment of the present invention may comprise: a first table on which a first half jelly roll is stacked; a second table on which a second half jelly roll is stacked; a separator disposed on the first table and the second table; a first separator reel unwinding the separator in a direction to the first table; a second separator reel unwinding the separator in a direction to the second table; an electrode header providing a first electrode and a second electrode to the first table and the second table; a first motor moving the separator in a direction for covering the first electrode and the second electrode provided on the first table; a second motor moving the separator in a direction for covering the first electrode and the second electrode provided on the second table; and an assembly header providing the second electrode between the first half jelly roll and the second half jelly roll.

## Description

### BACKGROUND OF THE INVENTION

### 1. Field

The present invention relates to an electrode assembly manufacturing apparatus and a manufacturing method of the same.

### 2. Description of the Related Art

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

An electrode assembly mounted in secondary batteries is a power generation element composed of a structure in which a cathode, an anode, and a separator interposed therebetween are stacked. Electrode assemblies are classified into a jelly roll type formed by interposing a separator between a cathode and an anode in the form of a long sheet coated with an active material and winding the same; and a stack type formed by stacking multiple cathodes and anodes of a predetermined size with a separator interposed therebetween.

A stack type electrode assembly had a problem that stacking cathodes, anodes, and separators take much time. To solve this problem, an attempt was made to increase efficiency by moving a table on which electrode assemblies was stacked, but as the stack continued to move, there was a problem that the electrodes deviated from their right positions and stability deteriorated.

### SUMMARY OF THE INVENTION

A problem that the present disclosure aims to solve is to provide an apparatus and a method for manufacturing an electrode assembly that can prevent electrodes from deviating from their right positions and increase productivity when stacking electrodes and separators in a stacked type.

The problems of the present invention are not limited to the problem mentioned above, and other problems that are not mentioned may be clearly understood by those skilled in the art from the description below.

The battery cell of the present disclosure can be widely applied in the field of green technology, such as electric vehicles, battery charging stations, solar power generation, and wind power generation using batteries. In addition, the battery cell of the present disclosure can be used in eco-friendly electric vehicles, hybrid vehicles, etc. to prevent climate change by suppressing air pollution and greenhouse gas emissions.

An electrode assembly manufacturing apparatus according to the present invention may include: a first table on which a first half jelly roll is stacked; a second table on which a second half jelly roll is stacked; a separator disposed on the first table and the second table; a first separator reel unwinding the separator in a direction to the first table; a second separator reel unwinding the separator in a direction to the second table; an electrode header providing a first electrode and a second electrode to the first table and the second table; a first motor moving the separator in a direction for covering the first electrode and the second electrode provided on the first table; a second motor moving the separator in a direction for covering the first electrode and the second electrode provided on the second table; and an assembly header providing the second electrode between the first half jelly roll and the second half jelly roll.

In one embodiment of the present invention, a first table and a second table may be physically connected.

In one embodiment of the present invention, a first table may include a first leg, and a second table may include a second leg, so that the first leg and the second leg may be formed to be perpendicular.

In one embodiment of the present invention, a first motor may move a separator by repeatedly moving horizontally with a first table.

In one embodiment of the present invention, a second motor may move a separator by repeatedly moving horizontally with a second table.

In one embodiment of the present invention, an electrode header may include a first electrode header disposing a first electrode on a first table and a second table.

In one embodiment of the present invention, an electrode header may include a second electrode header disposing a second electrode on a first table and a second table.

In one embodiment of the present invention, an assembly header may include a first assembly header surrounding and moving a first half jelly roll.

In one embodiment of the present invention, an assembly header may include a second assembly header surrounding and moving a second half jelly roll.

In one embodiment of the present invention, an assembly header may include a third assembly header providing a second electrode.

In one embodiment of the present invention, the electrode assembly manufacturing apparatus may include a stacking header surrounding a first half jelly roll, a second half jelly roll, and a second electrode with a separator.

An electrode assembly manufacturing method according to the present invention may include: a step in which a separator is unwound from a first separator reel in a direction to a first table and a separator is unwound from a second separator reel in a direction to a second table; a step in which a first separator is disposed on the first table and a second separator is disposed on the second table; a step in which a first electrode header disposes a first electrode on the first table and the second table; a step in which a first motor moves a separator on the first table and a second motor moves a separator on the second table; a step in which a first electrode header disposes a second electrode on the first table and the second table; a step in which an assembly header provides the second electrode between a first half jelly roll stacked on the first table and a second half jelly roll stacked on the second table; and a step in which a stacking header surrounds the circumference of the stacked half jelly roll with a separator.

The present invention can increase the productivity of electrode assembly by improving the speed of stacking a cathode, an anode, and a separator.

The present invention can prevent the problem that an electrode deviates from the right position to reduce the defect rate because a table on which stacks are manufactured is fixed.

### BRIEF DESCRIPTION OF THE DRAWINGS

FIG. 1 shows a diagram of an electrode assembly manufactured according to an embodiment of the present invention.
FIG. 2 shows a schematic diagram of a first electrode being seated according to an embodiment of the present invention.
FIG. 3 shows a schematic diagram of the movement of a first motor and a second motor according to an embodiment of the present invention.
FIG. 4 shows a schematic diagram of a second electrode being seated according to an embodiment of the present invention.
FIG. 5 shows a schematic diagram of the movement of a first motor and a second motor according to an embodiment of the present invention.
FIG. 6 shows a schematic diagram of a first half jelly roll and a second half jelly roll stacked according to an embodiment of the present invention.
FIG. 7 shows a schematic diagram of an assembly header moving a first half jelly roll and a second half jelly roll according to an embodiment of the present invention.
FIG. 8 shows a schematic diagram of an assembly header assembling a first half jelly roll, a second half jelly roll, and a second electrode and thereby stacking jelly rolls according to an embodiment of the present invention.
FIG. 9 shows a schematic diagram of a jelly roll surrounded by a separator according to an embodiment of the present invention.
FIG. 10 shows a flowchart of a sequence of manufacturing an electrode assembly according to an embodiment of the present invention.

### DETAILED DESCRIPTION

Terms or words used in the present specification and claims should not be construed as limited to their common or dictionary meanings, and should be construed as meanings and concepts consistent with the technical idea of the present invention based on the principle that an inventor may appropriately define the concept of terms in order to explain their invention in the best way. Therefore, the embodiments described in the present specification and the configurations illustrated in the drawings are merely one of the most preferred embodiments of the present invention and do not entirely represent the technical idea of the present invention. Therefore, it should be understood that at the time of filing the present application, various equivalents and modification examples that can replace them may exist.

Since the embodiments of the present invention are provided to more completely explain the present invention to those skilled in the art, the shapes, sizes or the like of the components in the drawings may be exaggerated, omitted, or schematically illustrated for clearer description. Therefore, the size or proportion of each component does not entirely reflect the actual size or proportion.

Hereinafter, with reference to the attached drawings, an electrode assembly manufacturing apparatus and a manufacturing method according to an embodiment of the present invention will be described in detail.

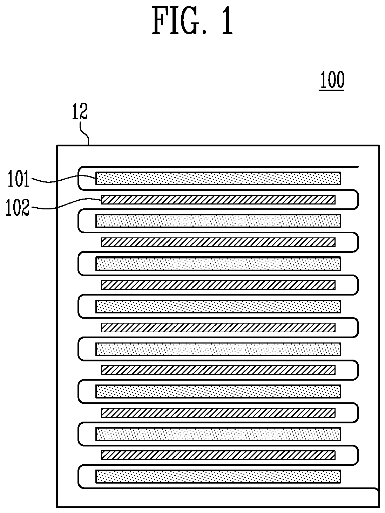

FIG. 1 shows a diagram of an electrode assembly 100 manufactured according to an embodiment of the present invention. An electrode assembly 100 includes a cathode, an anode, and a separator disposed between the cathode and the anode. According to an embodiment, a separator 12 may be interposed between a first electrode 101 and a second electrode 102 to manufacture an electrode assembly. A first electrode 101 and a second electrode 102 may be a cathode or an anode. A first electrode 101 and A second electrode 102 refer to different electrodes. For example, when a first electrode 101 is a cathode, a second electrode 102 is an anode; and when a first electrode 101 is an anode, a second electrode 102 refers to a cathode.

A cathode and an anode may include a current collector and an active material layer disposed on the current collector. For example, a cathode may include a cathode current collector and a cathode active material layer, and an anode may include an anode current collector and an anode active material layer.

A current collector may include a known conductive material to an extent that it does not cause a chemical reaction within a lithium secondary battery. For example, a current collector may include any one of stainless steel, nickel (Ni), aluminum (Al), titanium (Ti), copper (Cu), and alloys thereof, and may be provided in various forms such as film, sheet, and foil.

An active material layer includes an active material. For example, a cathode active material layer may include a cathode active material, and an anode active material layer may include an anode active material.

A cathode active material may be a material which lithium ions may be inserted to and extracted from. A cathode active material may be a lithium metal oxide. For example, a cathode active material may be one of a lithium manganese oxide, a lithium nickel oxide, a lithium cobalt oxide, a lithium nickel manganese oxide, a lithium nickel cobalt manganese oxide, a lithium nickel cobalt aluminum oxide, a lithium iron phosphate-based compound, a lithium manganese phosphate-based compound, a lithium cobalt phosphate-based compound and a lithium vanadium phosphate-based compound.

An anode active material may be a material which lithium ions may be inserted to and extracted from. For example, an anode active material may be any one of carbon-based materials such as crystalline carbon, amorphous carbon, carbon composite, and carbon fiber, a lithium alloy, silicon (Si), and tin (Sn). According to an embodiment, an anode active material may be natural graphite or artificial graphite, but is not limited to a specific example.

A cathode and an anode may each further include a binder and a conductive material. A binder may improve mechanical stability by mediating a bond between a current collector and an active material layer. For example, a binder may be an organic binder or an aqueous binder. For example, an organic binder may be one of vinylidene fluoride-hexafluoropropylene copolymer (PVDF-co-HFP), polyvinylidene fluoride (PVDF), polyacrylonitrile, and polymethylmethacrylate, and an aqueous binder may be styrene-butadiene rubber (SBR), but they are not limited thereto.

A conductive material may improve electrical conductivity of a secondary battery. A conductive material may include a metal-based material. According to an embodiment, a conductive material may include a conventional carbon-based conductive material. For example, a conductive material may include any one of graphite, carbon black, graphene, and carbon nanotubes, and preferably, a conductive material may include carbon nanotubes.

A separator is disposed between a cathode and an anode. A separator may be configured to prevent an electrical short between a cathode and an anode and to generate a flow of ions. For example, a separator may include a porous polymer film or a porous nonwoven fabric. A porous polymer film may be configured as a single layer or a multi-layer including a polyolefin polymer such as an ethylene polymer, a propylene polymer, an ethylene/butene copolymer, an ethylene/hexene copolymer, and an ethylene/methacrylate copolymer. A porous nonwoven fabric may include glass fibers of a high melting point and polyethylene terephthalate fibers. However, it is not limited thereto, and according to an embodiment, a separator may be a ceramic coated separator including ceramic.

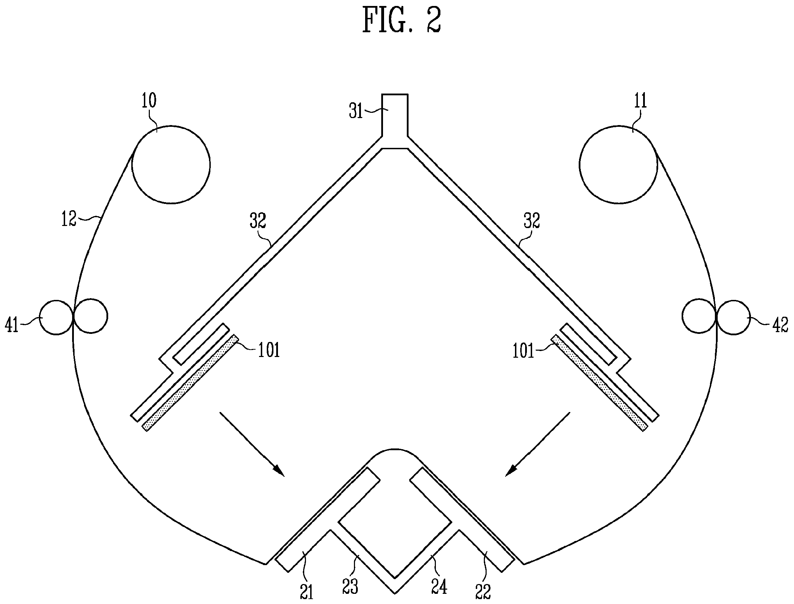

FIG. 2 shows a schematic diagram of a first electrode being seated according to an embodiment of the present invention. According to an embodiment, an electrode assembly manufacturing apparatus 200 includes: a first table 21, a second table 22, a separator 12, a first separator reel 10, a second separator reel 11, an electrode header, a first motor 41, a second motor 42, and an assembly header 50. A half jelly roll 110 may be stacked on a first table 21. A second half jelly roll 120 may be stacked on a second table 22. That is, a first half jelly roll 110 may be stacked on a first table 21, and a second half jelly roll 120 may be stacked on a second table 22.

A first half jelly roll 110 may refer to a stack produced by stacking a first electrode 101, a second electrode 102, and a separator 12 on a first table 21; and a second half jelly roll 120 may refer to a stack produced by stacking a first electrode 101, a second electrode 102, and a separator 12 on a second table 22.

As will be described later, a first half jelly roll 110 and a second half jelly roll 120 may be combined to configure one electrode assembly 100. According to an embodiment, when an electrode assembly is manufactured by configuring with two stacks, instead of configuring with one stack, and combining the stacks, productivity can be increased.

A first table 21 and a second table 22 are places where a first half jelly roll 110 and a second half jelly roll 110 are manufactured, as a first electrode 101, a second electrode 102, and a separator 12 are seated and stacked on the upper surfaces thereof. A first table 21 and a second table 22 may preferably include a flat cross-section so that a first half jelly roll 110 and a second half jelly roll 120 may be stacked, respectively. A separator 12 may be unwound from a first separator reel 10 and a second separator reel 11 and disposed on a first table 21 and a second table 22. A separator 12 unwound from a first separator reel 10 and a second separator reel 11 may be formed as one continuous separator 12.

Both ends of one separator 12 may be wound around a first separator reel 10 and a second separator reel 11, respectively. Preferably, half of a separator may be wound around a first separator reel 10, and the other half may be wound around a second separator reel 11.

A separator 12 disposed on a first table 21 may be unwound from a first separator reel 10. A separator 12 disposed on a second table 22 may be unwound from a second separator reel 11. Through this, a separator 12 may be unwound from each of a first separator reel 10 and a second separator reel 11 so that stacking can be quickly performed.

A first table 21 may include a first leg 23, and a second table 22 may include a second leg 24. A first leg 23 may be connected to a first table 21 and may change the position of a first table 21. For example, a first leg 23 may move a first table 21 so that the first table 21 may be horizontal or inclined with respect to the ground.

A second leg 24 is connected to a second table 22. A second leg 24 may be connected to a second table 22 and may change the position of a second table. For example, a second leg 24 may move a second table 22 so that the second table 22 may be horizontal or inclined with respect to the ground.

A first table 21 and a second table 22 may be physically connected. According to an embodiment, a first table 21 may be connected to a first leg 23 and a second table 22 may be connected to a second leg 24, and as a first leg 23 and a second leg 24 are connected, a first table 21 and a second table 22 may be connected. A first leg 23 and a second leg 24 may be connected around an axis.

According to an embodiment, a first leg 23 and a second leg 24 may be formed to be perpendicular. As a first leg 23 and a second leg 24 are formed to be perpendicular, a first leg 23 and a second leg 24 may be formed at an angle of 45 degrees with the ground.

A first table 21 is perpendicularly coupled to a first leg 23, and a second table 22 is perpendicularly coupled to a second leg 24 so that a first table 21 and a second table 22 may be formed at an angle of 45 degrees with the ground.

Of course, it is not limited to this, and a first leg 23 and a second leg 24 may form an arbitrary angle with the ground.

By forming a certain angle with the ground, an electrode header described later can easily stack a first electrode 101 and a second electrode 102.

A separator 12 may be fixed between a first table 21 and a second table 22 through a gripper. A gripper may be positioned between a first table 21 and a second table 22 to fix the position of a separator 12. When a separator 12 is disposed on a first table 21 and a second table 22, an electrode header 30 may provide a first electrode 101 and a second electrode 102.

An electrode header 30 may move a first electrode 101 and a second electrode 102 by adsorbing one surface of the first electrode 101 and the second electrode 102, but it is not limited as long as it is a means that can move the position without damaging the electrodes. An electrode header 30 may include a first electrode header 31 moving a first electrode 101.

A first electrode 101 may be disposed on a separator 12 disposed on a first table 21. Specifically, when a separator 12 is disposed flat on one region of a first table 21, a first electrode 101 may be stacked above the separator 12. A first electrode 101 may be disposed on a separator 12 disposed on a second table 22.

A first electrode 101 may be dispose on a first table 21 and a second table 22 at the same time, but after disposing a first electrode 101 on a first table 21, the first electrode 101 may be disposed on a second table 22. The sequence is not limited as long as a first electrode 101 is each disposed on a separator 12 disposed on a first table 21 and a second table 22.

Through this, half jelly rolls may be stacked on a first table 21 and a second table 22, respectively, and productivity and efficiency can be improved. A first electrode header 31 may be provided with a plurality of first electrode header arms 32 that can simultaneously stack a first electrode 101 on a first table 21 and a second table 22.

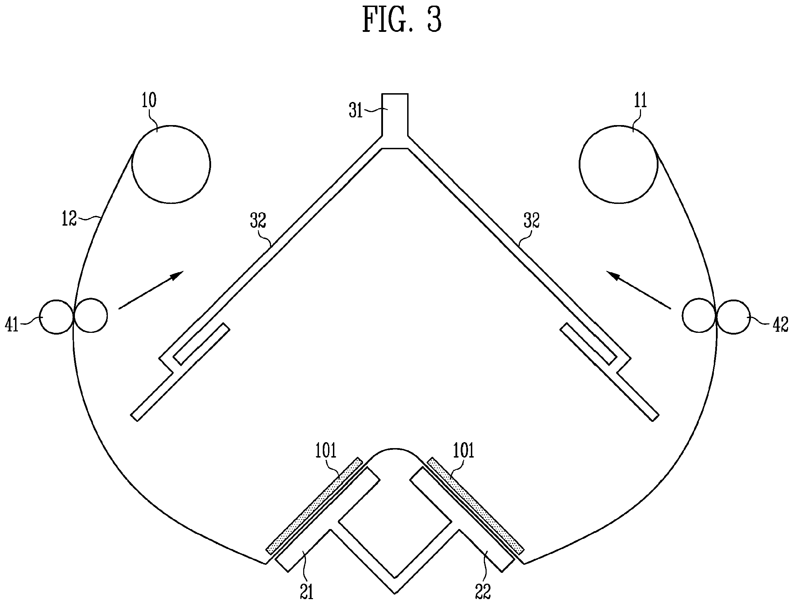

FIG. 3 shows a schematic diagram of the movement of a first motor 41 and a second motor 42 according to an embodiment of the present invention. A first motor 41 may move a separator 12 in a direction for covering a first electrode 101 provided on a first table 21. A first motor 41 may be coupled to a separator 12 unwound from a first separator reel 10.

As a first motor 41 moves, a separator 12 may move. When a first electrode 101 is dispose on a first table 21, a first motor 41 may move in a direction for covering the first electrode 101 to move a separator 12. A first motor 41 may move a separator 12 by moving horizontally with a first table 21. In this process, one end of a first electrode 101 may be in contact with a separator 12, and the separator 12 may be folded due to a first electrode 101. When a first motor 41 moves a sufficient distance, a separator 12 may be positioned to cover an upper portion of a first electrode 101.

A second motor 42 may move a separator 12 in a direction for covering a first electrode 101 provided on a second table 22. A second motor 42 may move a separator 12 unwound from a second separator reel 11 by fixing and coupling it. When a first electrode 101 is disposed on a second table 22, a second motor 42 may move a separator 12 by moving horizontally with a second table 22. In this process, one end of a second electrode 102 may be in contact with a separator 12, and the separator 12 may be folded due to a first electrode 101. When a second motor 42 moves a sufficient distance, a separator 12 may be positioned to cover an upper portion of a first electrode 101.

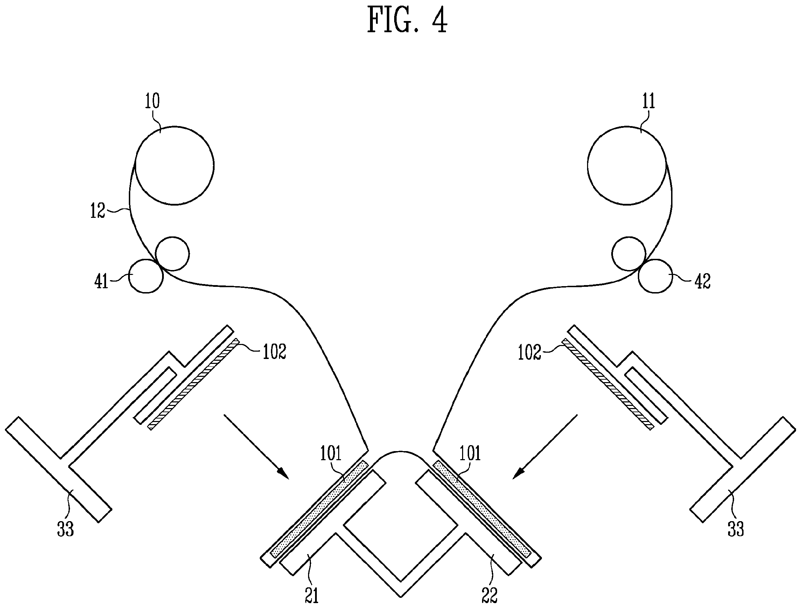

FIG. 4 shows a schematic diagram of a second electrode 102 being seated according to an embodiment of the present invention. As described above, an electrode header 30 may provide a second electrode 102 to a first table 21 and a second table 22. An electrode header 30 may further include a second electrode header 33 adsorbing and moving a second electrode 102. A second electrode 102 may be provided on a separator 12 positioned on a first table 21 and a second table 22. Specifically, after a separator 12 is stacked on a first table 21, a first electrode 101 may be stacked, and after a separator 12 is stacked again, a second electrode 102 may be stacked. On a second table 22, a first electrode 101, a second electrode 102, and a separator 12 may be stacked in the same sequence as a stack is stacked on a first table 21.

An electrode header 30 may further include a second electrode header 33 adsorbing and moving a second electrode 102. As described above, the configuration of a second electrode header 33 is not limited to a method of adsorbing and moving as long as it can move without damaging the second electrode 102. A first electrode header 31 and a second electrode header 33 may be configured as separate devices.

A first electrode header 31 and a second electrode header 33 move vertically in a direction perpendicular to the table to allow a first electrode 101 and a second electrode 102 to seat on a first table 21 and a second table 22.

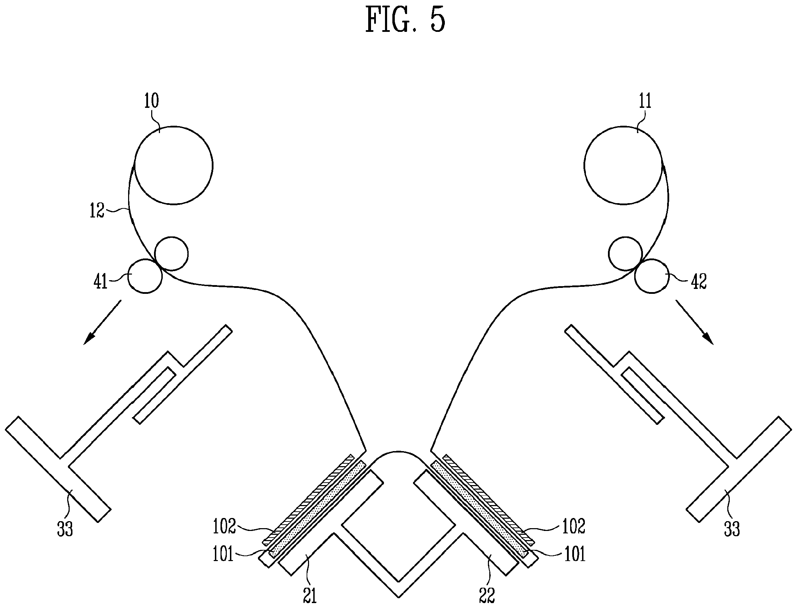

FIG. 5 shows a schematic diagram of the movement of a first motor 41 and a second motor 42 according to an embodiment of the present invention. According to an embodiment, when a second electrode 102 is stacked above a separator 12, a first motor 41 and a second motor 42 may move. A first motor 41 and a second motor 42 may move in a direction where a separator 12 covers a second electrode 102.

As described above, a first motor 41 and a second motor 42 may move in a direction opposite to the direction in which the first motor 41 and the second motor 42 move a separator 12 to cover a first electrode 101. In this process, one end of a second electrode 102 may be in contact with a separator 12, and the separator 12 may be folded due to the second electrode 102. When a first motor 41 and a second motor 42 move a sufficient distance, a separator 12 may be positioned to cover an upper portion of a second electrode 102.

As described above, a first motor 41 may move a separator 12 by moving horizontally with a first table, or may move a separator 12 by undergoing a rotational movement. In addition, a second motor 42 may also undergo a rotational movement to move a separator 12. When a separator 12 may be moved to cover a first electrode 101 or a second electrode 102, the movement of a first motor 41 and a second motor 42 is limited to a horizontal movement and a rotational movement.

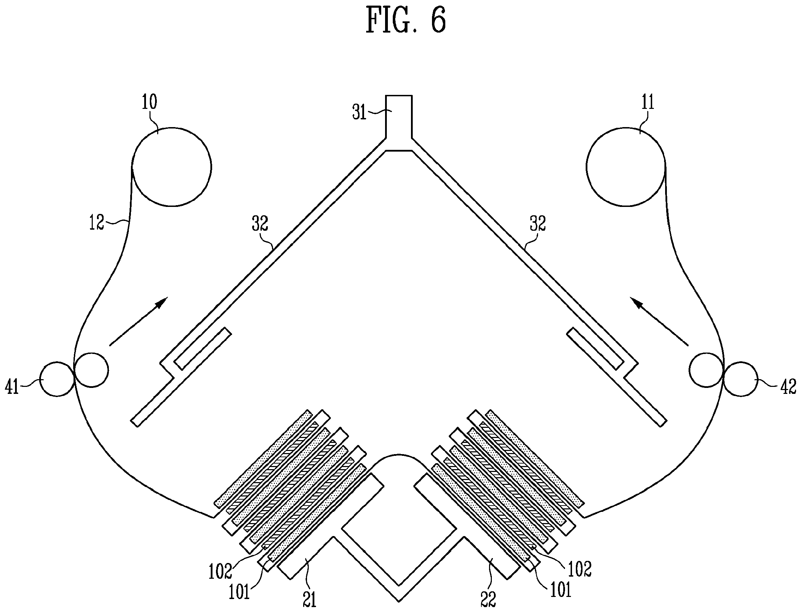

FIG. 6 shows a schematic diagram of a first half jelly roll 110 and a second half jelly roll 120 stacked according to an embodiment of the present invention. A separator 12 - a first electrode 101 - a separator 12 - a second electrode 102 - a separator 12 may be repeatedly positioned on a first table 21 to stack a first half jelly roll 110. A separator 12 - a first electrode 101 - a separator 12 - a second electrode 102 - a separator 12 may be repeatedly positioned on a second table 22 to form a second half jelly roll 120. The number of first electrodes 101 and second electrodes 102 is not limited. According to an embodiment, a first electrode 101 may be positioned at the top of a first half jelly roll 110 and a second half jelly roll 120. A first motor 41 may move horizontally with a first table 21 to cover a first electrode 101, and when a separator 12 covers a first electrode 101, a first half jelly roll 110 may be manufactured. A second motor 42 may move horizontally with a second table to cover a first electrode 101, and a separator 12 may cover a first electrode 101 and a second half jelly roll 120 may be manufactured. A first half jelly roll 110 and a second half jelly roll are connected through one separator 12.

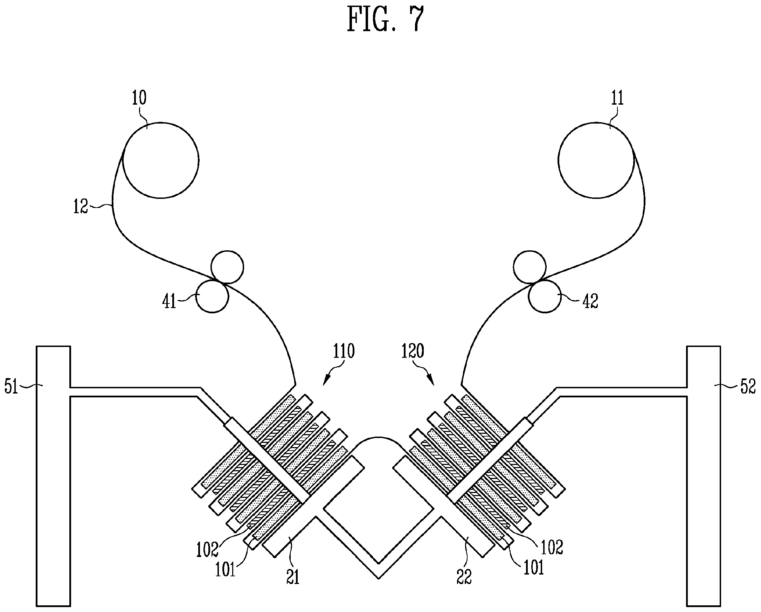

FIG. 7 shows a schematic diagram of an assembly header 50 moving a first half jelly roll 110 and a second half jelly roll 120 according to an embodiment of the present invention. An assembly header 50 may form one half jelly roll by moving a first half jelly roll 110 and a second half jelly roll. An assembly header 50 may include a first assembly header 51 moving a first half jelly roll 110. A first assembly header 51 may move a first half jelly roll 110 by surrounding and fixing the first half jelly roll 110 from the outside.

As long as a first assembly header 51 may be moved without damaging the same by applying appropriate tension to a first half jelly roll 110, the fixing and moving method is not limited. For example, a first half jelly roll 110 may be fixed in the form of tongs as if surrounding the same, and a hexahedral container may be provided to accommodate a first half jelly roll 110 as if surrounding the same. In this case, since a first half jelly roll 110 does not flow down, a stable structure may be maintained. In addition, an assembly header 50 may include a second assembly header 52 moving a second half jelly roll 120. As long as a second assembly header 52 may move a second half jelly roll 120 without damaging the same, the structure of a second assembly header 52 fixing a second half jelly roll 120 is not limited to the embodiment in the drawing.

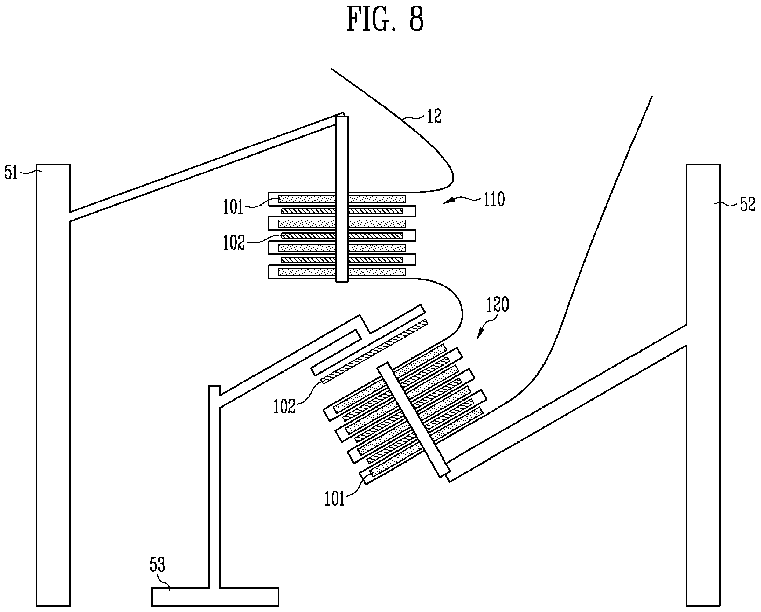

FIG. 8 shows a schematic diagram of an assembly header 50 assembling a first half jelly roll 110, a second half jelly roll 120, and a second electrode 102 and thereby stacking jelly rolls according to an embodiment of the present invention. An assembly header 50 may include a third assembly header 53 providing a second electrode 102. A third assembly header 53 may adsorb and move a second electrode 102, but the driving method is not limited thereto as long as a second electrode 102 may be moved without damaging the same. According to an embodiment, when a first assembly header 51 fixes a first half jelly roll 110 and positions the same upward and a second assembly header 52 fixes a second half jelly roll 120 and positions the same downward, a third assembly header 53 may dispose a second electrode 102 between the first half jelly roll 110 and the second half jelly roll 120. Since a first half jelly roll 110 and a second half jelly roll 120 are connected through a separator 12, a second electrode 102 may be in contact with the connected separator 12 and may fold the separator 12.

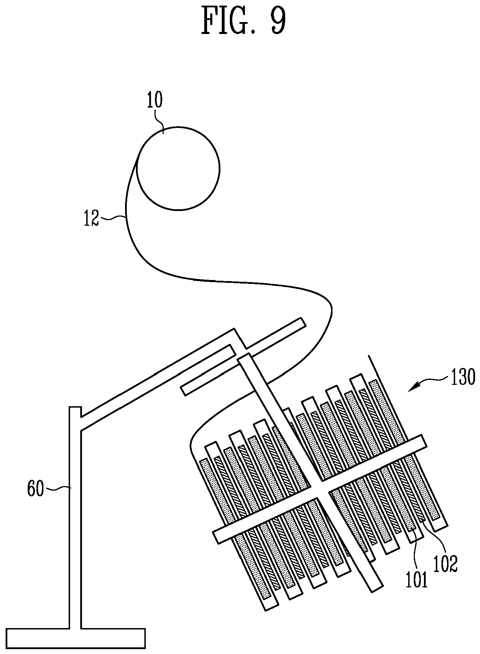

FIG. 9 shows a schematic diagram of a jelly roll surrounded by a separator 12 according to an embodiment of the present invention. A first half jelly roll 110, a second half jelly roll 120, and a second electrode 102 may be coupled into a preliminary stack 130 by a stacking header 60. A stacking header 60 may be replaced with an assembly header 50. Therefore, a first assembly header 51, a second assembly header 52, or a third assembly header 53 may fix a preliminary stack 130 in which a first half jelly roll 110, a second half jelly roll 120, and a second electrode 102 are combined. According to an embodiment, a stacking header 60 may be configured as a separate device from an assembly header 50.

A stacking header 60 may rotate a preliminary stack 130 to surround the preliminary stack 130 with a separator 12. A separator 12 surrounding a preliminary stack 130 may be formed by being connected to both a first separator reel 10 and a second separator reel 11.

According to an embodiment, a separator 12 connected to a second separator reel 11 may be cut at one end of a preliminary stack 130. Since the other end of the preliminary stack 130 is connected to a first separator reel 10, an electrode header 30 may rotate the preliminary stack 130 as if surrounding a separator 10 unwound from the first separator reel 10 from the outside of the preliminary stack 130. A preliminary stack 130 may be surrounded by a separator 12 and the separator 12 may be bonded to manufacture an electrode assembly 100.

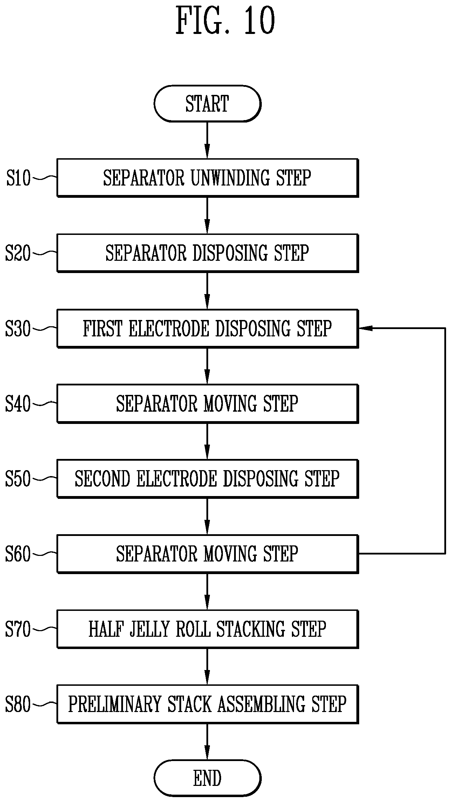

FIG. 10 shows a flowchart of a sequence of manufacturing an electrode assembly according to an embodiment of the present invention. According to an embodiment, an electrode assembly may be manufactured through a separator unwinding step S 10, a separator disposing step S20, a first electrode disposing step S30, a separator moving step S40, a second electrode disposing step S50, a separator moving step S60, a half jelly roll stacking step S70, and a preliminary stack assembling step S80.

In a separator unwinding step S10, a separator may be unwound from a first separator reel in a direction to a first table, and a separator may be unwound from a second separator reel in a direction to a second table. In a separator unwinding step S10, the present disclosure may unwind a separator from a first separator reel in a direction to a first table and may unwind a separator from a second separator reel in a direction to a second table.

In other words, a separator 12 may be unwound from each of a first separator reel 10 and a second separator reel 11. A separator 12 unwound from a first separator reel 10 and a second separator reel 11 may be formed as one continuous separator 12. Both ends of a separator 12 may each be wound around a first separator reel 10 and a second separator reel 11. Preferably, half of a separator may be wound around a first separator reel 10, and the other half may be wound around a second separator reel 12.

In a separator disposing step S20, a first separator may be disposed on a first table, and a second separator may be disposed on a second table. In a separator disposing step, the present disclosure may dispose a first separator on the first table and may dispose a second separator on the second table.

In other words, a separator 12 may each be disposed on a first table 21 and a second table 22. A first table 21 and a second table 22 are places where a first half jelly roll 110 and a second half jelly roll 120 including a separator are manufactured, so it may be desirable that they have a flat cross-section.

In a first electrode disposing step S30, a first electrode header may dispose a first electrode on a first table and a second table. An electrode header 30 may dispose a first electrode 101 on a separator disposed on a first table 21 and a second table 22. In a first electrode disposing step S30, the present disclosure may dispose a first electrode on the first table and the second table.

A first electrode 101 may be disposed on a first table 21 and a second table 22 at the same time. According to an embodiment, a first electrode 101 may be disposed on a first table 21 first, and then the first electrode 101 may be disposed on a second table 22. It may be performed in the opposite sequence. As long as a first electrode 101 may be disposed on a first table 21 and a second table 22, the sequence is not limited.

In a separator moving step S40, a first motor may move a separator on a first table and a second motor may move a separator on a second table. In a separator moving step S40, the present disclosure may move a separator on the first table by a first motor and may move a separator on the second table by a second motor. When a first electrode 101 is seated above a separator 12, a first motor 41 may move in conjunction with one region of a separator 12 positioned between a first table 21 and a first separator reel 10, thereby moving the separator 12. Through this, a separator 12 may cover a first electrode 101. By moving in conjunction with one region of a separator 12 positioned between a separator 12 seated on a second table and a second separator reel 11, a second motor 42 may move the separator 12 to cover the first electrode 101.

In a second electrode disposing step S50, a first electrode header may dispose a second electrode on a first table and a second table. In a second electrode disposing step S50, the present disclosure may dispose a second electrode on the first table and the second table. When a separator 12 covers a first electrode 101, an electrode header 30 allows a second electrode 102 to seat on each of a first table 21 and a second table 22. An electrode header 30 may include a second electrode header 33 moving a second electrode.

After a second electrode disposing step S50, a separator moving step S60 may be carried out. When a second electrode 102 is seated above a separator 12, a first motor 41 moves in conjunction with one region of the separator 12 positioned between a first table 21 and a first separator reel 10 to move the separator 12, thereby covering a second electrode 102. In addition, a second motor 42 moves in conjunction with one region of the separator 12 positioned between a second table 22 and a second separator reel to move the separator 12, thereby covering a second electrode 102.

Thereafter, a process of disposing a first electrode 101 and disposing a second electrode 102 may be repeated. The number of times of repeating the process is not limited, and the process may be repeated as many times as preset by a user to carry out stacking.

Through repetition, a first half jelly roll 110 may be manufactured on a first table 21 and a second half jelly roll 120 may be manufactured on a second table.

In a half jelly roll stacking step S70, an assembly header may provide a second electrode between a first half jelly roll stacked on a first table and a second half jelly roll stacked on a second table. In a half jelly roll stacking step S70, the present disclosure may prove the second electrode between a first half jelly roll stacked on the first table and a second half jelly roll stacked on the second table.

The manufactured first half jelly roll 110 and second half jelly roll 120 are coupled and moved by an assembly header 50, and the assembly header 50 may dispose a second electrode 102 between a first half jelly roll 110 and a second half jelly roll 120.

An assembly header 50 may include a first assembly header 51 moving a first half jelly roll 110, may include a second assembly header 52 moving a second half jelly roll 120, and may include a third assembly header 53 disposing a second electrode.

In a preliminary stack assembling step S80, a stacking header may surround the circumference of a stacked half jelly roll with a separator. In a preliminary stack assembling step S80, the present disclosure may surround the circumference of the stacked half jelly roll with a separator. A process of surrounding a preliminary stack 130 with a separator may be performed. A separator 12 included in a preliminary stack 130 may be connected to a first separator reel 10 and a second separator reel 11. According to an embodiment, a separator 12 connected to a second separator reel 11 may be cut.

Thereafter, a stacking header 60 may fix and rotate a preliminary stack 130 to surround a separator connected to a first separator reel 10 along the outside of the preliminary stack 130 and bond a separator 12 to manufacture an electrode assembly 100. A stacking header 60 may be replaced with an assembly header 50. Therefore, a first assembly header 51, a second assembly header 52, or a third assembly header 53 may fix a preliminary stack 130 formed by combining a first half jelly roll 110, a second half jelly roll 120, and a second electrode 102. According to an embodiment, a stacking header 60 may be configured as a separate device from an assembly header 50.

As described above, an electrode assembly manufacturing apparatus and a manufacturing method of the same according to an embodiment of the present invention can increase the productivity of an electrode assembly and provide an electrode assembly with an improved defect rate.

Although the present invention has been described above with limited embodiments and drawings, the present invention is not limited thereto, and various corrections and modifications are possible within the equivalent scope of the technical idea and the claims by those skilled in the art in the technical field to which the present invention pertains.

## Claims

1. An electrode assembly manufacturing apparatus comprising:
a first table on which a first half jelly roll is stacked;
a second table on which a second half jelly roll is stacked;
a separator disposed on the first table and the second table;
a first separator reel unwinding the separator in a direction to the first table;
a second separator reel unwinding the separator in a direction to the second table;
an electrode header providing a first electrode and a second electrode to the first table and the second table;
a first motor moving the separator in a direction for covering the first electrode and the second electrode provided on the first table;
a second motor moving the separator in a direction for covering the first electrode and the second electrode provided on the second table; and
an assembly header providing the second electrode between the first half jelly roll and the second half jelly roll.

2. The electrode assembly manufacturing apparatus according to claim 1, wherein the first table and the second table are connected with each other.

3. The electrode assembly manufacturing apparatus according to claims 1 or 2, wherein the first table includes a first leg, and the second table includes a second leg, and the first leg and the second leg are formed to be perpendicular.

4. The electrode assembly manufacturing apparatus according to any one of the preceding claims, wherein the first motor moves the separator by moving horizontally with the first table.

5. The electrode assembly manufacturing apparatus according to any one of the preceding claims, wherein the first motor moves the separator by moving horizontally with the second table.

6. The electrode assembly manufacturing apparatus according to claim any one of the preceding claims, wherein the electrode header includes a first electrode header disposing the first electrode on the first table and the second table.

7. The electrode assembly manufacturing apparatus according to claim any one of the preceding claims, wherein the electrode header includes a second electrode header disposing the second electrode on the first table and the second table.

8. The electrode assembly manufacturing apparatus according to claim any one of the preceding claims, wherein the assembly header includes a first assembly header surrounding and moving the first half jelly roll.

9. The electrode assembly manufacturing apparatus according to claim any one of the preceding claims, wherein the assembly header includes a second assembly header surrounding and moving the second half jelly roll.

10. The electrode assembly manufacturing apparatus according to claim any one of the preceding claims, wherein the assembly header includes a third assembly header providing the second electrode.

11. The electrode assembly manufacturing apparatus according to claim any one of the preceding claims, comprising a stacking header surrounding the first half jelly roll, the second half jelly roll, and a second electrode provided between the first half jelly roll and the second half jelly roll with a separator.

12. An electrode assembly manufacturing method comprising:
unwinding a separator from a first separator reel in a direction to a first table and unwinding a separator from a second separator reel in a direction to a second table;
disposing a first separator on the first table and disposing a second separator on the second table;
disposing a first electrode on the first table and the second table;
moving a separator on the first table by a first motor and moving a separator on the second table by a second motor;
disposing a second electrode on the first table and the second table;
providing the second electrode between a first half jelly roll stacked on the first table and a second half jelly roll stacked on the second table; and
surrounding the circumference of the stacked half jelly roll with a separator.

13. The electrode assembly manufacturing method according to claim 12, wherein the first motor repeatedly moves horizontally with the first table to move a separator.

14. The electrode assembly manufacturing method according to claims 12 or 13, wherein the second motor repeatedly moves horizontally with the second table to move a separator.
